# EUROPEAN PATENT APPLICATION

(11) **EP 3 141 129 A1**
(43) Date of publication of application: **15.03.2017**
(21) Application number: 16187897.0
(22) Date of filing: 08.09.2016
(51) Int. Cl.: A21D 2/18, A23P 20/10, A23L 29/262, A23L 29/212, A23P 20/12

(54) **MICROWAVEABLE COATED FOOD PRODUCT AND METHOD OF MANUFACTURE**

(30) Priority: 09.09.2015 EP 15184555
(71) Applicant: Crisp Sensation Holding S.A., 1208 Geneva (CH)
(72) Inventor: MICHIELS, Wilhelmus Johannes Gerardus, 6301 GS Nederweert (NL); VAN DER VOLK, Bianca, 5215 BL's Hertogenbosch (NL); PICKFORD, Keith Graham, Manchester, Lancashire M45 7QF (GB)
(74) Representative: Browne, Robin Forsythe

(57) **Abstract**

A frozen, microwaveable, coated food product comprises:
a core of cooked edible material having a weight equal to 15-95wt% of the food product,
a fried coating that envelops the core of edible material and having weight equal to 5-85wt% of the food product, the coating being formed from at least four coating layers, including successively: a primary aqueous coating, a bonding crumb layer, a secondary aqueous coating and a coating crumb layer;
wherein the primary aqueous coating and the secondary aqueous coating contain less than 10wt% flour, preferably 5wt% flour, by weight of dry matter and at least 10% cellulose ether by weight of dry matter.

## Description

### TECHNICAL FIELD OF THE INVENTION

This invention relates to coated food products which may be cooked or reheated using a microwave oven or using a combined microwave and conventional oven, referred to collectively in this specification as a microwave oven or using a conventional thermal oven. The invention relates particularly but not exclusively to crumb coated products, particularly chicken nuggets or other products wherein a meat, fish, poultry, vegetable, fruit, fungus materials or dairy products substrate is coated with two or more layers of crumb, wherein the products may be cooked or reheated from a frozen state using a microwave oven, a combined microwave and thermal oven or conventional oven. Cool-line products which are thawed from frozen and maintained below ambient temperature are also included.

The invention also relates to a method of manufacturing such a microwaveable or thermally reheatable coated food product and to an apparatus for carrying out such method.

### BACKGROUND OF THE INVENTION

Use of a microwave or combination oven for cooking or reheating coated products is problematic because the substrate is heated from the inside by the microwave radiation generating steam which may damage the coating layers. Damage may be caused by physical stress or by water transport to and absorption of water in the coating layer. Conventional coated products are therefore unsuitable for use in microwave or combination ovens.

Many food materials, for example natural muscle of poultry, fish or red meat or vegetable or processed foods, contain a large percentage of water. Most fresh foods contain more than 60% water. Some of this water is bound, that is tightly attached to the constituent cells. The remaining mobile water is available and can be frozen. If a food product is frozen to a core temperature of between -1°C and -30°C or lower and is placed and irradiated in a microwave oven, the microwave energy will be primarily absorbed by the frozen available water. Whereas in conventional cooking heat is applied from the exterior, in microwave cooking heat is generated from within. The process of heating can be very rapid so that available water is converted into steam. When a food product is allowed to stand after heating in a microwave oven, water can continue to be expelled from the product. This is particularly noticeable for example when heating frozen fish muscle. The loss of water causes any food coating, particularly a batter, pastry or breadcrumb coating to become soggy and unpalatable. In addition the core of the substrate may become dry due to the loss of water.

WO 93/03634 describes a method of producing a coated foodstuff which may be reheated by microwave irradiation, the method comprising: applying to the foodstuff a predust; applying a batter to the predusted foodstuff; frying the battered foodstuff, and cooling the fried product.

WO 95/30344 describes a process for microwaveable coated food products comprising the steps of predust application, secondary coated portion application, crumb application, flash frying, freezing and packaging.

WO 97/03572 describes a process for microwaveable coated food products, such as chicken nuggets, comprising the steps of predust application, secondary coated portion application, crumb application, flash frying, freezing and packaging.

WO 10/001101 describes a method of manufacture of a crumb coated food product comprising the steps of: forming an aqueous mixture comprising: flour, sodium bicarbonate, optional additives and water; adding the mixture into an extruder; adding an aqueous gelling agent to the extruder; extruding the resultant mixture at a temperature greater than 100°C to form an expanded porous product; drying the product, and milling the dried product to form a crumb. The crumb so obtained is particularly suitable for use in the preparation of coated food products that are cooked or reheated from a frozen state using a microwave oven.

### SUMMARY OF THE INVENTION

The present invention relates to a method for the production of a frozen coated food product that can be reheated or cooked in a microwave oven to produce a ready-to-eat product with outstanding sensory properties, especially a crunchy coating in combination with a succulent moist core.

According to a first aspect of the present invention there is provided a method of producing a frozen, microwaveable, coated food product comprising the successive steps of:
providing a portion of a solid or solidified substrate;
coating the portion with a primary aqueous coating liquid to form a primary coated portion;
applying a coating of bonding crumb to the primary coated portion to form a bonding crumb coated portion;
applying a secondary aqueous coating liquid to the bonding crumb coated portion to form a secondary coated portion;
applying a coating of coating crumb to the secondary coated portion to form a breaded portion;
frying the breaded portion by contacting the breaded portion for at least 100 seconds with hot oil having a temperature of at least 150°C; and
freezing the fried coated portion;
wherein the primary coating liquid and the secondary coating liquid contain less than 10wt%, preferably less than 5wt% flour.

Preferably the primary aqueous coating liquid contains at least 0.05wt%, more preferably 0.1-1wt% of cellulose ether. The cellulose ether is preferably methyl cellulose.

Preferably the primary aqueous coating liquid contains at least 0.03wt%, more preferably 0.05-1wt% egg protein.

Preferably the primary aqueous coating liquid contains at least 0.05wt%, more preferably 0.01-1wt% of a gum selected from xanthan gum, gellan gum, guar gum, locust bean gum, carrageenan gum and combinations thereof. Use of xanthan gum, gellan gum and mixtures thereof is especially preferred.

Preferably the primary aqueous coating liquid contains at least 0.1wt%, more preferably 0.15-2wt% of modified starch.

Preferably the primary aqueous coating liquid contains 0.5wy% to 19wt% of a dispersed oil phase.

The primary aqueous coating liquid may contain at least 95wt% water. The amount of dry solids is preferably from 0.5wt% to 3wt%, particularly 1wt% to 2.5wt%, especially 1wt% to 2wt%. Advantageous coating liquids contain 1wt%, 1.5wt% or 2wt% of dry solids.

Preferably the secondary aqueous coating liquid contains at least 0.05wt%, more preferably 0.1-1wt% cellulose ether. The cellulose ether is preferably methyl cellulose.

Preferably the secondary aqueous coating liquid contains at least 0.03wt%, more preferably 0.05-1wt% egg protein.

Preferably the secondary aqueous coating liquid contains at least 0.05wt%, more preferably 0.01-1wt% of a gum selected from xanthan gum, gellan gum, guar gum, locust bean gum, carrageenan gum and combinations thereof. Use of xanthan gum, gellan gum and mixtures thereof is especially preferred.

Preferably the secondary aqueous coating liquid contains at least 0.1wt%, preferably 0.15-2wt% of modified starch.

In advantageous embodiments the secondary aqueous coating may include a starch, preferably oat starch, rice starch and mixtures thereof. An amount of starch by dry weight of 5wt% to 30wt%, preferably 10wt% to 25wt%, especially about 20wt%.

Preferably the secondary aqueous coating liquid contains 0.5-19wt% of a dispersed oil phase.

The secondary aqueous coating liquid may contain at least 80wt% water. The amount of dry solids may be from 0.5wt% to 3wt%, particularly 1wt% to 2.5wt%, especially 1wt% to 2wt%. Advantageous coating liquids contain 1wt%, 1.5wt% or 2wt% of dry solids.

The composition of the primary and secondary aqueous costing liquids may be the same or different, dependent on the required properties of each coating layer.

The substrate may be stabilised with a stabilised composition as described below.

According to a second aspect of the invention there is provided a frozen, microwaveable, coated food product comprising:
a core of cooked edible material having a weight equal to about 15wt% to about 95wt% of the food product,
a fried coating that envelops the core of edible material and having weight equal to 5wt% to 85wt% of the food product, the coating being formed from at least four coating layers, including successively from the inside to the outside of the coating: a primary aqueous coating, a bonding crumb layer, a secondary aqueous coating layer and a coating crumb layer;
wherein the primary aqueous coating and the secondary aqueous coating contain less than 10wt% flour, preferably 5wt% flour, by weight of dry matter and at least 10% cellulose ether by weight of dry matter.

Preferably both the bonding crumb layer and the coating crumb layer comprise a milled farinaceous dough extrudate containing about 0.05wt% to about 5wt% of added hydrocolloid.

Preferably both the bonding crumb and the coating crumb comprise a milled farinaceous dough extrudate containing about 0.05wt% to about 5wt% of added hydrocolloid.

The term "added hydrocolloid" as used herein refers to hydrophilic polymers that are not naturally present in the farinaceous component of a dough extrudate and that are capable of increasing the viscosity of an aqueous medium to which they have been added. These hydrophilic polymers are suitably selected naturally occurring gums.

The term aqueous coating refers to a coating which is applied in the form of an aqueous coating composition before frying

The aqueous coating compositions are not batter compositions. The primary and secondary aqueous coatings contain less than 10wt% flour. Preferably flour is not present in the primary or secondary aqueous coatings.

Food products in accordance with this invention exhibit many advantages. The fried coating may have a weight which forms a smaller proportion of the total weight and which may be thinner than a similar product having a batter coating layer. The coating may be crisper and may not exhibit the dough-like taste of a battered product.

Therefore products in accordance with this invention achieve a high percentage pick-up of crumb without a need for a relatively heavy and dough-like tasting outer coating. The relative amount of crumb in relation to the batter drysolids may be significantly increased.

Food products having a coating in accordance with this invention have a further advantage that the coating layer has high integrity and strength, reducing or preventing any tendency of a fluid filling or substrate such as a sauce to bleed through the coating during reheating, whether in a microwave oven or other oven or when served for consumption.

Food products in accordance with this invention may exhibit numerous advantages in comparison to equivalent products with batter layers. The aqueous coatings exhibit a relatively high pick up of crumb giving a product with excellent crispness and taste in comparison to a battered product, despite having a lower dry solids content. This improves the texture and flavour and has the further advantage that the amount of water which can build up in the coating during manufacture or on storage is less than for a battered product. Adhesion of the crumb to the substrate is excellent despite the absence of the conventionally required flour containing batter. Crispness is also enhanced and the absence of a bulky flour layer may reduce fat uptake and retention during frying. It had previously been considered that a batter was necessary to attain an acceptable crumb coated fried product.

The dry solids content of the aqueous gel first or second coating liquids may be about 0.5%wt% to about 5%wt% more typically about 1wt% to about 3wt%. Relative to the weight of the substrate this may be 0.1% to about 2%, more typically about 0.2% to about 1%.

Oil absorption may be reduced resulting in a lower fat content of the fried product.

In a preferred embodiment the fried coating that envelops the core of the edible material has a weight equal to about 5wt% to about 85wt% of the food product, said coating comprising at least four coating layers, successively including from the inside to the outside of the fried coating: a primary aqueous coating, a bonding crumb layer, a secondary aqueous coating and a coating crumb layer,
preferably both the bonding crumb layer and the outer crumb layer contain at least 80wt% of a hydrocolloid containing milled farinaceous dough extrudate containing about 0.05wt% to about5wt% of added hydrocolloid.

Percentages and other quantities referred to in this specification are selected from any ranges quoted to total 100%.

In a preferred embodiment the primary aqueous coating may comprise:

| | |
|---|---|
| cellulose gum | 15-35wt% |
| modified starch | 15-35wt% |
| hydrocolloid | 20-30wt% |
| protein component | 10-20wt% |
| Total | 100wt% |

Preferably the primary aqueous coating comprises

| | |
|---|---|
| cellulose gum | 20-30wt% |
| modified starch | 20-40wt% |
| hydrocolloid | 20-40wt% |
| egg albumen | 10-30wt% |
| Total | 100wt% |

A particularly advantageous primary aqueous coating composition comprises

| | |
|---|---|
| cellulose gum | 25% |
| modified starch | 35wt% |
| xanthan gum | 25wt% |
| egg albumen | 15wt% |
| Total | 100wt% |

The dry ingredients may be dissolved in water to produce a viscous or gel-like solution.

The viscous or gel-like solution may contain at least 80wt% water. The solution may contain from about 0.5wt% to 5wt%, particularly 1wt% to 3wt%. Relative to the weight of the substrate this may be 0.1% to about 2%, more typically about 0.2% to about 1%.

Demineralised water may be used, particularly when the formulation includes a microwave absorbing salt as disclosed below. When used, the demineralised water may contain no more than 20 parts per billion (ppb) preferably no more than 2 ppb of inorganic minerals.

The balance of the coating composition may be water, although vegetable oil, for example in an amount of 5wt% may be used as a heat transfer medium, allowing the coating to be heated to a higher temperature during frying.

The secondary aqueous coating may comprise the following ingredients by dry weight:

| | |
|---|---|
| cellulose gum | 15-35wt% |
| modified starch | 15-35wt% |
| hydrocolloid | 15-30wt% |
| protein component | 10-20wt% |
| | 100% |

The primary aqueous coating may also comprise the above mentioned ingredients or those disclosed below.

The ingredients may be combined in water to provide a solution containing from about 0.5wt% to 3wt%, particularly 1wt% to 2.5wt%, especially 1wt% to 2wt% by weight of solids in an aqueous solution. Advantageous coating liquids contain 1wt%, 1.5wt% or 2wt% by weight of the dry ingredients.

Preferably the secondary aqueous coating comprises:

| | |
|---|---|
| cellulose gum | 20-30wt% |
| modified starch | 20-40wt% |
| hydrocolloid | 15-40wt% |
| egg albumen | 10-30wt% |
| | 100% |

In preferred embodiments the hydrocolloid is selected from: xanthan gum, gellan gum and mixtures thereof.

A particularly advantageous secondary coating composition comprises

| | |
|---|---|
| cellulose gum | 25wt% |
| modified starch | 35wt% |
| xanthan gum | 25wt% |
| egg albumen | 15wt% |
| | 100% |

A further particularly advantageous secondary coating composition comprises

| | |
|---|---|
| cellulose gum | 25wt% |
| modified starch | 35wt% |
| xanthan gum | 15wt% |
| egg albumen | 25wt% |
| | 100% |

The substrate may be stabilised with a composition comprising:

| | |
|---|---|
| cellulose gum | 15wt% |
| modified starch | 24wt% |
| polydextrose | 40wt% |
| xanthan gum | 6wt% |
| egg albumen | 15wt% |
| | 100% |

Vegetable oil in an amount of about 1wt% to about 10wt%, preferably about 5wt%, may be added to the coating solution.

A secondary moisture controlling additive salt may be added to the secondary coating composition. An amount of about 2wt% to about 10wt%, preferably about 6wt%, may be employed. The secondary additive may be selected from the salts compounds disclosed above. Preferably the secondary additive is a calcium salt, especially calcium phosphate.

The pickup of the secondary coating composition may be about 8wt% to about 20wt%, typically about 12 to 16wt% relative to the final product. For example 15wt% relative to the final product.

Any excess of the aqueous coating composition may be removed using an air knife or other blower.

One or more layers of outer crumb may be applied to the secondary coating.

A moisture controlling metal salt may be added to one or both of the aqueous coating compositions. The salt may comprise a microwave susceptor or absorbing, reflecting or scattering salt selected so that the temperature of an adjacent coating or other foodstuff is increased upon irradiation with microwave energy. An amount of about 1wt% to about 5wt% may be added to the aqueous coating composition wherein the aqueous composition contains a total of about 0.1wt% to about 2.0wt%, typically about 0.9wt%, of the above mentioned ingredients dissolved in water. Preferably the aqueous coating composition includes about 3wt% of the salt

A salt of calcium, magnesium, iron, zinc or copper may be used. Preferably iron, calcium or magnesium salt may be used. For example iron (III) phosphate or iron (III) sulphate is particularly suitable. Alternatively a calcium salt, for example calcium phosphate, carbonate or sulphate may be employed. A mixture of susceptor compounds may be used. Various microwave absorbing salts are described in WO2014/111402.

Various phosphates of these metals may be used, for example orthophosphates, pyrophosphates, polyphosphates or higher condensed phosphates. Alternatively carbonates, hydroxides or carboxylates such as citrates or gluconates may be employed.

A preferred primary susceptor salt is an iron salt, particularly iron (III) phosphate in an amount of about 1wt% to about 5wt%, preferably about 1wt% to about 3wt% of the weight of the aqueous coating.

Use of an iron salt as a susceptor in the primary coating has been found to yield an overall crisper coated product.

In an advantageous aspect of the present invention there is provided a method of preparing a frozen, microwaveable, coated food product comprising the successive steps of:
providing a portion of a solid or solidified substrate;
coating the portion with a first aqueous coating liquid to form a primary coated portion;
applying a coating of bonding crumb to the primary coated portion to form a bonding crumb coated portion;
applying a second aqueous coating liquid to the bonding crumb coated portion to form a secondary coated portion;
applying a coating of coating crumb to the secondary coated portion to form a breaded portion;
frying the breaded portion by contacting said breaded portion for at least 100 seconds with hot oil having a temperature of at least 150° C; and
freezing the fried coated portion;
wherein the first aqueous coating liquid and/or the second aqueous coating liquid contains 1wt% to 6wt% of a metal salt selected from: metal phosphates, metal carbonates, metal hydroxides, metal citrates, metal gluconates and combinations thereof.

The metal salt serves as a moisture controlling additive to reduce moisture in the coating layer during preparation, freezing and storage. The metal salt may prevent moisture migration. Alternatively or in addition the salt may absorb microwave radiation to cause localised heating and crisping of the coating layer.

The moisture controlling metal salt may be a salt of: iron, calcium, magnesium, zinc, copper, sodium, potassium and combinations thereof.

More preferably the moisture controlling metal salt is a salt of a metal selected from: iron, calcium, magnesium and combinations thereof.

The moisture controlling metal salt may have a water solubility at 20°C of less than 60 g/l, more preferably of less than 20 g/l, even more preferably of less than 5 g/l.

In this aspect the moisture controlling metal salt may be selected from: iron(III) orthophosphate (FePO₄), iron(III) pyrophosphate (Fe₄(P₂O₇)₃), monocalcium phosphate (Ca(H₂PO₄)₂), dicalcium phosphate (CaHPO₄), tricalcium phosphate (Ca₃(PO₄)₃OH), acid calcium pyrophosphate (CaH₂P₂O₇), monomagnesium phosphate (Mg(H₂PO₄)₂), dimagnesium phosphate (MgHPO₄), trimagnesium phosphate (Mg₃(PO₄)₂), magnesium metaphosphate ([Mg(PO₃)₂]ₙ), magnesium pyrophosphate (Mg₂P₂O₇), trizinc phosphate (Zn₃(PO₄)₂), zinc pyrophosphate (Zn₂P₂O₇) copper(II) pyrophosphate (Cu₂P₂O₇), sodium aluminium phosphate, acidic sodium aluminium sulphate, calcium carbonate (CaCO₃), magnesium hydroxide (Mg(OH)₂), tricalcium citrate, calcium gluconate, tetrasodium pyrophosphate (Na₄P₂O₇) and combinations thereof.

Preferably the moisture controlling metal salt is selected from: iron(III) orthophosphate (FePO₄), iron(III) pyrophosphate (Fe₄(P₂O₇)₃), acid calcium pyrophosphate (CaH₂P₂O₇), monomagnesium phosphate (Mg(H₂PO₄)₂), dimagnesium phosphate (MgHPO₄), trimagnesium phosphate (Mg₃(PO₄)₂), magnesium pyrophosphate (Mg₂P₂O₇), magnesium hydroxide (Mg(OH)₂), tetrasodium pyrophosphate (Na₄P₂O₇) and combinations thereof.

Advantageously the moisture controlling metal salt is selected from: iron (III) orthophosphate (FePO₄), iron(III) pyrophosphate (Fe₄(P₂O₇)₃) and combinations thereof.

The invention further provides a frozen, microwaveable, coated food product comprising:
a core of cooked edible material,
a fried crumb coating that completely envelops the core of cooked edible material, said fried crumb coating containing a moisture controlling amount of a metal salt selected from: metal phosphates, metal carbonates, metal hydroxides, metal citrates, metal gluconates and combinations thereof.

Preferably the moisture controlling salt has a water solubility at 20°C of less than 60 g/l, more preferably of less than 20 g/l, even more preferably of less than 5 g/l.

The food product may be obtainable by any of the previously disclosed methods.

The primary and secondary coating solutions may be applied to the substrate pieces using tempura dippers. An air knife or other air blower may be provided for removing any excess liquid from the coated substrate pieces.

Application of a coating of bonding crumb is facilitated by the use of the primary aqueous coating liquid since the crumb particles may not adhere sufficiently to a dry substrate. The application of the primary aqueous coat additionally offers the advantage that it may reduce loss of moisture and uptake of oil by the substrate during frying due to stabilising properties of the aqueous composition. Use of a conventional flour or breadcrumb based predust in place of the aqueous composition would not cause the crumb to adhere sufficiently to the substrate and would confer absorbent properties rather than moisture resistance as achieved by the present invention.

The aqueous primary or secondary coating liquids preferably have a minimum viscosity of 300 cP, measured using a Brookfield viscometer with a number 3 spindle at 60 rpm at 10°C. More preferably, the viscosity lies within the range of 350-450 cP, more preferably in the range of 380-420 cP.

The bonding crumb composition preferably comprises a crumb formed from a dough which has been co-extruded with a gum, as disclosed in WO 2010/001101, the disclosure of which is incorporated herein by reference for all purposes.

The bonding crumb may have a dimension less than 0.8mm.

The bonding crumb may be provided as a component of a bonding crumb composition which comprises the extruded crumb together with a polyglucose component and optional further ingredients. A preferred polyglucose component is maltodextrin, although a mixture of maltodextrin and polydextrose may be used. An amount of about 1wt% to about 15wt%, of polyglucose component, preferably about 7wt% to about 13wt%, more preferably about 10w.% may be employed. The bonding crumb composition may comprise about 70wt% to about 90wt%, preferably about 75wt% to about 85wt%, typically 81wt% of the extruded crumb by dry weight.

In preferred embodiments the bonding crumb component further comprises a secondary microwave susceptor compound. The susceptors disclosed above may be employed. Use of calcium phosphate is preferred. An amount of the secondary microwave susceptor compound of about 1wt% to about 10wt%, preferably about 4wt% to 8wt%, more preferably about 6wt% may be used.

The primary coating composition may further comprise a pH adjuster, for example sodium carbonate. A typical amount may be about 2wt%. The pH of the composition may be between pH4 and pH7, typically about pH 5.

The bonding crumb composition may further include an oleophilic carrier mixed with the crumb particles, for example an edible oil, preferably a vegetable oil in an amount of about 1 wt% to about 5wt%, preferably about 2wt%.

The weight of the bonding crumb composition may be 5-15wt%, preferably 6-10wt%, for example about 8wt% relative to the weight of the substrate.

The bonding crumb composition may be applied as particles or as a powder using a conventional crumb applicator so that the composition, when applied, forms a complete shell covering the entire surface of the substrate.

In preferred embodiments of this invention the formulations consist essentially of the ingredients recited, in the sense that any additional ingredients are not present in a sufficient amount to affect the essential properties and characteristics of the product. In further embodiments the products consist only of the recited ingredients.

Use of a process in accordance with this invention confers several advantages particularly in comparison to conventional battered and crumbed products. The breaded crust may be lighter and thinner than for a battered product. For example the weight of the crumb may be about 10% to about 20%, typically about 15%, of the weight of a battered coating. The reduced amount of crust results in a reduced amount of starch providing a less starchy taste, allowing the flavour and texture of the crumb and substrate to be more readily appreciated by a consumer.

The fried coating on one side of the present food product preferably has an average thickness of 1 to 8 mm, more preferably of 1.5 to 5 mm, and most preferably of 1.8 to 4 mm.

The invention provides a microwaveable frozen product which has been cooked before freezing and which can be reheated in a microwave or combination microwave/thermal oven to give a satisfactory product with a succulent core and crisp crumb coating. Products of this invention may be also reheated using a conventional thermal oven.

The core of cooked edible material preferably has a weight equal to about 50wt% to about 95wt% and the fried coating has a weight equal to about 5wt% to about 50wt% of the total weight of the food product.

The benefits of the present invention are particularly evident in embodiments in which the core of edible material contains an appreciable amount of water. During microwave reheating in particular, some of the water contained in the core of the product will turn into steam. Although we do not wish to be bound by theory, it is believed that the fried coating of the present product is permeable to the steam that is generated within the core of the product, but it hardly absorbs any of the steam, thus retaining its crisp nature. Typically the core of edible material contains at least 15wt%, more preferably at least 25wt%, and most preferably at least 30wt% water. The water content of the core material normally does not exceed 90wt%.

The coated food product of the present invention is suitably prepared by frying the product for a sufficiently long time to ensure that the edible material that makes up the core is fully cooked. The fried product may be further cooked in an oven if necessary, for example for large or bulky products. Thus the product can simply be reheated in a microwave without the need for further heating for a sufficiently long period as necessary to completely cook it. The product of this invention may withstand such a prolonged period of frying without detriment. In contrast, conventional coated products may be damaged by prolonged frying.

The use of a hydrocolloid-containing milled dough extrudate in both the bonding crumb and the coating crumb coating offers a further advantage that, together with the aqueous coating layers, these crumb coatings form a shell which may act as a barrier to penetration of oil into the core of the portion during the prolonged period of frying. Thus, the two crumb layers made of the aforementioned milled dough extrudate produce a fully cooked fried product having a relatively low fat content. Surprisingly, this lower fat content has virtually no adverse effect on the eating quality of the coated food product that is obtained by the present method. Typically, the fried coating of the coated food product has a fat content that is substantially lower, for example at least 10% lower, than that of a coated food product that is identical except for the fact that it was prepared using ordinary crumb. Preferably, the coating has a fat content of less than 20w.%, more preferably a fat content of about 2wt% to about 15wt%, and most preferably of about 4wt% to about 12wt%. Here the term fat refers to lipids selected from; triglycerides, diglycerides, monoglycerides, free fatty acids, phospholipids and mixtures thereof.

The coating of the present food product possesses unique properties. Not only does this coating absorb little fat during frying, but it also may absorb a reduced amount of water. Furthermore, the fried coating may be very stable in the presence of humidity. This special quality explains why steam that is produced during microwave reheating of the edible core can escape from the product without causing the fried coating to become unacceptably soggy. Thus, the fried coating of the present food product typically has a water content of not more than 10wt%, more preferably of not more than 5wt%, after microwave reheating. Here the water content refers to the water content after microwave reheating to a core temperature of 80°C.

The milled extrudate that is contained in the inner bonding crumb layer typically has a mass weighted average particle size of less than 2 mm. More preferably, the milled extrudate in the inner crumb layer has a mass weighted average particle size of less than 1.8 mm, more preferably 0.1 to 1.5 mm, even more preferably 0.15 to 1 mm, and most preferably 0.25 to 0.9 mm.

Typically, the inner crumb layer has a weight of 1-20% of the weight of the fried product. Even more preferably, the inner crumb layer represents about 2wt% to about 10wt% most preferably about3wt% to about 8wt% of the fried product.

The particle size distribution of the crumb and the milled extrudate can suitably be determined by use of a set of sieves of different mesh sizes in a manner well-known to a person skilled in the art.

The milled extrudate that is employed in the inner crumb layer preferably contains not more than a minor amount of particles having particle size in excess of 1.5 mm. Preferably, not more than 5wt% of the milled extrudate comprised in the inner crumb layer has a particle size of more than 1.5 mm, preferably of more than 1.2 mm.

The milled extrudate that is contained in the coating crumb layer preferably has a mass weighted average particle size of 0.5 to 3 mm, more preferably 1 to 3 mm.

The inner bonding and outer coating crumb layers of the frozen, microwaveable product may contain minor amounts of other crumb material besides the milled farinaceous dough extrudate. The inner crumb layer preferably contains at least 80wt%, most preferably at least 90wt% of the milled farinaceous dough extrudate. Likewise, the outer crumb layer contains at least 80wt%, most preferably at least 90wt% of the milled farinaceous dough extrudate. In preferred embodiments no other crumb materials are present in order to maximise the moisture resistance of the coating.

Typically, the outer coating crumb layer has a weight equal to about 3wt% to about 25wt% of the weight of the fried product. Even more preferably, the coating crumb layer has a weight of about 5wt% to about 15wt%, most preferably of about 8wt% to about 12wt% of the fried product, said percentages being dependent on the shape and dimensions of the product.

The milled extrudate that is employed in the coating crumb layer preferably contains not more than a small amount of fines. Typically, not more than 5wt% of the milled extrudate in the outer crumb layer has a particle size of less than 0.5 mm, preferably of less than 0.8 mm. The absence of fines or dust allows complete coating of the substrate surface with crumb of the desired particle sizes. The presence of fines or dust may prevent or reduce adhesion of the desired crumb onto the substrate by coating the surface thereof.

Microwaveable products of particularly good quality can be obtained by employing a relatively fine milled extrudate in the bonding crumb layer and a relatively coarse milled extrudate in the coating layer. Accordingly, in an especially preferred embodiment of the present food product, the milled extrudate that is contained in the coating crumb layer has a mass weighted average particle size that is at least 50% higher, more preferably at least 100% higher and most preferably 200% to 500% higher than the mass weighted average particle size of the milled extrudate that is contained in the bonding crumb layer.

The hydrocolloid used in the milled extrudate may be any hydrocolloid which forms a gel or otherwise increases viscosity when mixed with water. Preferred hydrocolloids produce a milled extrudate which retains shape when stirred in water having a temperature of 20°C for a period of 60 seconds. Use of a hydrocolloid may provide a degree of water resistance to the milled extrudate reducing any tendency to pick up moisture. Typically, hydrocolloid is contained in the milled extrudate in a concentration of about 0.06wt% to about4wt%, more preferably about 0.08wt% to about 3wt% and most preferably about 0.1wt% to about 3wt%.

Examples of hydrocolloids that may be used in the milled farinaceous dough extrudate of the inner and outer crumb layers include: natural gums, modified gums, pectin, alginate, arabinogalactan, agar, carrageenan, furcellaran, xanthan and combinations thereof. Preferably, the hydrocolloid is selected from natural gums and combinations thereof. Use of gelatin or starch is not preferred.

Examples of natural gums that may suitably be employed as a hydrocolloid in the milled farinaceous dough extrudate include; guar gum, xanthan gum, locust bean gum, gum Arabic, tragacanth, gum karaya, gum ghatti, xanthan gum and combinations thereof.

Most preferably, the hydrocolloid is selected from: guar gum, locust bean gum, xanthan gum and combinations thereof.

Advantageously, the milled extrudates employed in the bonding crumb and the coating crumb have the same composition.

The bonding crumb and coating crumb are preferably dried to a low water content before use, for example below 2wt%, preferably below 1.5wt%, more preferably below 1.3wt%.

A suitable drying process is disclosed in EP-B-2606745, the disclosure of which is incorporated into this specification by reference for all purposes.

The edible material contained in the core of the coated food product suitably comprises fish, meat, poultry, shellfish, shrimps, dairy products (e.g. cheese), ragu, vegetable, fungi and combinations thereof. According to a particularly preferred embodiment animal material selected from fish, meat, poultry, shellfish, shrimps and combinations thereof represents at least 40wt%, even more preferably at least 60wt% and most preferably at least 80wt% of the core of edible material.

According to a preferred embodiment, the portions of solid substrate contain at least 30wt%, preferably at least 50wt% of animal tissue.

Preferably the core of edible material has a thickness not greater 50 mm, more preferably of not more than 15 mm, most preferably of not greater than 10 mm. This conveniently allows sufficient penetration of microwave radiation within a period of 2 to 3 minutes using the power available in a typical domestic microwave oven.

The portions of solid or solidified substrate that are coated with the aqueous precoating liquid may be solid at ambient temperature or, alternatively, they may be liquid or paste-like at ambient temperature. In the latter case, that is if the substrate is not solid at ambient temperature, the substrate is cooled to a sufficiently low temperature to render it solid, before applying the precoating liquid.

The present method may suitably be used to produce coated food products from portions of solid substrate have a weight in the range 5-300 g. Preferably, the portions of solid substrate have a weight in the range of 10 to 50 g.

The portions of the substrate may be whole portions, for example whole muscle portions such as individual steaks or fillets or larger pieces which may be cut into individual portions after cooking or reheating. Alternatively the pieces may comprise chopped or comminuted pieces, for example, nuggets or minced products which may be pressed or otherwise reconstituted into larger portions. Use of pieces with uniformly sized and weighted cores is preferred.

The solid or solidified substrate may be extruded using a die into portions, for example on a wire mesh conveyor. The temperature of the extruded portions may be in the range of -6 to 6°C preferably of -4 to -1°C to stiffen the substrate to facilitate handling during the subsequent processing steps.

The substrate, especially if it is composed of chopped or comminuted pieces, is preferably impregnated with an aqueous or particulate stabiliser composition, for example by soaking, permeation or injection (for example vacuum pulse injection) into the substrate prior to forming into portions. Examples of suitable stabiliser compositions can be found in WO 97/03572, the disclosure of which is incorporated herein by reference for all purposes. The substrate may be impregnated with the stabiliser composition to the extent that the ingredients are distributed throughout the substrate or impregnate the bulk of the substrate structure. Impregnation may be achieved by soaking, permeation or injection into the substrate prior to forming into portions.

The present method may suitably employ a crumb coating apparatus that comprises a first endless conveyor and a second endless conveyor located below the downstream end of the first conveyor, and beneath a flow of fine crumb particles so that portions fall from the first conveyor onto a layer of particles on the second conveyor. The second conveyor may pass through a curtain of fine crumb falling onto the conveyor surface so that the portion falls onto the crumb causing the crumb to adhere to the surface layer of the aqueous precoating, and is then coated by the falling curtain of crumb particles. The apparatus may comprise a dispenser having an outlet extending across of the conveyor to provide the curtain of fine crumb extending across the path of the portions on the conveyor. A roller may be located above the conveyor on the exit side to bear on the coated portion to improve adhesion of the fine crumb.

Crumb may be applied in excess to the portion using a crumb applicator for example a CrumbMaster (trade mark of CFS). The crumb coated portion may be passed through a roller to improve adhesion.

The total amount of aqueous precoating liquid, batter and crumb that is applied onto the portion in the present method is preferably such that, after frying, the fried portion has a weight that exceeds the weight of the uncoated portion of solid substrate by 25-100%, preferably by 30-60%.

The breaded portion may be fried to cook the substrate and coating layers. The period of cooking is preferably sufficient to completely cook the substrate preventing any health risk in the event that a frozen product is insufficiently reheated from the frozen state in a microwave oven. A comparatively long period of reheating in a microwave oven is undesirable since the substrate is heated from the inside by the microwave energy resulting in a loss of moisture. This may lead to a dry core and damage to the coating layers.

A homogeneous outer crumb coating, with none of the underlying batter layer being exposed is advantageous to provide a uniformly browned appearance after a prolonged period of frying. This may be compared to a product obtained after a shorter period of frying as commonly used for conventionally thermally cooked breaded products.

The bonding crumb that is bound by the aqueous precoating may form a stabilising thermal barrier underlying the secondary coating layer and the second coating of crumb may provide a barrier to escape of moisture and ingress of oil during a prolonged frying stage. The coating layers may also serve to protect the surface of the substrate from excessive local heating during frying.

For conventional thermally cooked breaded products such as chicken nuggets, a short period of frying, for example 90 seconds or less, has been followed by a further period of cooking in a hot air oven. This is disadvantageous for microwave cookable products because the core of the substrate may not be thoroughly cooked during reheating from the frozen state. Prolonged heating of conventional products in a microwave oven leads to excessive loss of moisture and consequent damage to the coating layers.

During the frying step the breaded portion, optionally after having been coated with one or more additional crumb layers, is preferably contacted with the hot oil for 120-300 seconds, more preferably for 130-240 seconds, most preferably for 140-180 seconds. A typical frying time is 150 seconds.

The hot oil that is used for frying the breaded portion preferably has a temperature of 160-200°C, more preferably 170-195°C and most preferably 180-185°C.

The oil employed preferably is a vegetable oil. The term "vegetable oil" encompasses non-modified vegetable oils, hydrogenated vegetable oils, fractions of vegetable oils (for example olein or stearin fractions), interesterified vegetable oils and combinations thereof.

Preferably the core temperature of the fried portion after frying is greater than 72°C, more preferably greater than 74°C.

Frying in accordance with this invention is advantageous in comparison to flash frying followed by hot air cooking as the latter may not give a coating with desired hardness without moisture loss from the core. However a hot air oven such as an oven belt cooker, may be used to further cook larger products in cases where the frying time is insufficient to fully cook the products, for example for bone-in products or whole muscle products such as chicken breast fillets.

The breaded portion is suitably fried by immersing the breaded portion in the hot oil, for example by passing it through a bath of hot oil by means of a conveyor belt. The frying apparatus preferably comprises a double layer of parallel endless belts both layers passing beneath the oil surface, a portion carried on the lower layer being prevented from floating during frying by contact with the upper layer. The belts may comprise wire screens or other perforated configurations.

It has been found that in order to produce a frozen coated food product that, although it comprises a moist core, can be heated in a microwave or combination oven to yield a ready-to-eat hot product with a crunchy coating, the freezing conditions employed in the process are important. More specifically, it has been found that the core temperature of the fried coated portion should be reduced very quickly after frying, that is it is inserted quickly into the freezer. when the core temperature of the fried portion is still high. Although we do not wish to be bound by theory, it is believed that rapid freezing of the fried portion wherein the dwell time between frying and introduction into the freezer is short enhances the structural integrity of the product, reduces formation of ice crystals and reduces the size of any ice particles which may be formed within the products. If ice crystals are present in a battered breaded product they can become superheated in a microwave oven creating hot spots in the core. Also migration of ice crystals on storage can lead to a build-up of localised ice which on heating can result in release of excessive moisture near to the surface coating.

This may be contrasted with conventional processes wherein fried products are allowed to cool before introduction into a freezer. The fried portions are preferably introduced into the freezer after a period of less than 10 minutes, preferably less than 5 minutes after removal from the freezer.

In a particularly preferred embodiment of the present method, the fried coated portion that is produced by frying of the breaded portion has a core temperature in excess of 70°C and is frozen by introducing said fried portion into a freezer before the core temperature of the fried coated portion has fallen to a temperature of 50°C, and said core temperature is reduced in the freezer to less than -15°C, using cryogenic freezing.

In accordance with a particularly preferred embodiment, the fried coated portion has a core temperature of more than 65°C, preferably of more than 70°C, when it is introduced into the freezer.

The cryogenic freezing of the fried coated portion in the present method suitably comprises contacting said fried portion with a liquid gas, more preferably a cryogen, especially liquid nitrogen.

According to a particularly preferred embodiment, the fried portion has a core temperature of at least 50°C, more preferably of at least 60°C, even more preferably of at least 65°C and most preferably of at least 70°C when it is contacted with the liquid gas.

Preferably, the fried portion is contacted with a liquid gas until the core temperature of the portion is less than -15 °C, more preferably less than -20°C and most preferably less than -22°C.

The core temperature of the fried coated portion preferably does not decrease by more than 25°C, more preferably by not more than 20°C and most preferably by not more than 15°C before the fried portion is placed in the freezer, more preferably before it is contacted with liquid gas.

The frozen products may be suitably packaged for storage and distribution. Packaging under an inert atmosphere, for example nitrogen, is preferred.

The frozen product may be reheated or cooked from the frozen state before use using an oven selected from: a microwave oven, a conventional oven or grill, deep or shallow fried, or an oven using a combination of microwave and conventional heating.

The invention is further described by means of example, but not in any limitative sense.

### Example 1

In a pre-processing stage, pieces of chicken or other substrate are cut to an appropriate size or comminuted as required. The substrate pieces are impregnated with a stabiliser composition, as described in Examples 1 and 2. A forming machine is used to form the product. A conventional forming machine may be arranged to extrude chicken substrate pieces having a predetermined thickness and one or more shapes. The pieces are extruded onto a conveyor arranged to carry them to a tempura dipper containing an aqueous coating composition as described in Example 3 to form a pre-coated product.

The tempura coating apparatus is used to apply the primary aqueous coating. This comprises a reservoir for the primary aqueous coating composition or pre-gel. A first lower conveyor carries pieces beneath the surface of the aqueous composition. A second upper conveyor prevents the pieces from floating. This ensures complete coating of the pieces. The upper and lower conveyors are disposed in parallel spaced relation to form a channel within which the pieces are located during coating.

A second lower conveyor carries the substrate pieces out of the reservoir beneath the upper conveyor. The substrate pieces emerging from the reservoir pass under an air jet to remove excess liquid.

Following application of the primary aqueous coating a coating of crumb fines is applied using a crumb applicator. The crumb fines may be made by milling crumb manufactured in accordance with the disclosure of WO2011/001101.

The fine crumb coated substrates are then passed through a tempura applicator to apply a secondary aqueous coating followed by application of the outer crumb..The substrate pieces which have been coated with primary aqueous coating and crumb fines are passed through a bath of the secondary aqueous coating using a wire mesh conveyor, so that complete immersion of the pieces is achieved.

A first layer of heavy grist coating crumb may be applied to the secondary coated product followed by a lighter grist crumb to infill between the heavy crumb particles. Alternatively, a single outer crumb layer may be employed, particularly when using a large sized outer crumb.

Where two outer crumb layers are used, a first coating of outer crumb may be applied using a conventional crumb applicator. The crumb is preferably sieved to remove fines and small particles. A second coating of outer crumb may be applied to ensure complete covering of the substrate.

A frying time of 2 minutes 30 seconds was used although this may be varied dependent on the weight and size of the particles. After frying the core temperature of the products was in the range 74°C to 85°C. A small loss of weight was observed due to loss of water from the substrate but this is mostly compensated for by an uptake of oil.. The fryer contains rapeseed oil that is heated to a constant temperature of 180°C to 188°C. Pure rapeseed oil is employed.

Following frying the hot fried products were directly without delay passed using a conveyor into a cryogenic freezer so that the core temperature of the fried products is reduced to a maximum of -25°C, usually -30°C to -35°C or lower during a period of 30 minutes or less

The frozen products were packaged in hermetically sealed packages. The packing may be flushed with nitrogen (13) although this may not be used dependent on the required shelf life of the packaged products.

### Example 2: Stabiliser Composition

A stabiliser composition was prepared using the following ingredients:-

| Ingredient | % |
|---|---|
| cellulose gum (Methocel™ A4M) | 15.0 |
| modified starch (Thermflo™) | 24.0 |
| polydextrose | 40.0 |
| xanthan gum | 6.0 |
| egg albumen | 15.0 |
| Total | 100.0 |

The composition was dissolved in water to produce a solution with a concentration suitable to stabilise the particular substrate in use. To this end the dry powder mixture was partially hydrated in a tub and then poured into a bowl chopper. The bowl chopper was then run for two to three minutes until the mixture was fully hydrated. The mixture can be hydrated directly in the bowl chopper if required. Alternatively, the stabiliser may be hydrated using a high shear mixer fitted with a general purpose head.

This general purpose formula may be modified to increase its efficiency in specific substrates. The above formula may be modified by addition of citric acid (up to 1%) and ascorbic acid (up to 2%) with the polydextrose (Litesse II (Trade Mark)) being reduced accordingly.

### Example 3 - Impregnation of Substrate with Stabiliser Composition

A chicken mixture for chicken dippers or nuggets was prepared with the following composition which was prepared as a dry mixture, as an alternative to use of a hydrated stabiliser composition. The stabiliser of Example 1 was used.

| Ingredient | % |
|---|---|
| chicken emulsion | 20% |
| skin - 3mm | 18% |
| chicken breast - 10mm | 50% |
| water | 2% |
| rusk | 2% |
| stabiliser (Example 1) | 5% |
| seasoning | 3% |
| | 100% |

The chicken breast was chilled to -3°C and minced using a 10mm plate. After mincing, the temperature was 0-3°C. Water was added with mixing. A chicken emulsion comprising the following ingredients was added with mixing:

| Ingredient | % |
|---|---|
| chicken skin | 44% |
| water | 44% |
| soya isolate | 11% |
| salt | 1% |
| | 100% |

The stabiliser in accordance to Example 1 was added and mixed thoroughly. Rusk was added with mixing following by seasoning. A dry powder flavouring was preferred. The composition was allowed to dissolve in use in water which was present in the substrate in order to form an aqueous stabiliser solution in situ.

A vacuum was applied to the mixture to consolidate the structure following which the chicken mixture was chilled to -3°C and formed into shaped pieces.

A similar procedure was used for other comminuted meat products. Large particulate cores may be manufactured using a similar method.

### Example 4 - Primary Aqueous Coating Liquid

(a) The following mixture was prepared:

| Ingredient | % |
|---|---|
| modified starch (Thermflo) | 35% |
| thickener (Methocel A4M) | 25% |
| xanthan gum | 25% |
| egg albumen | 15% |
| | 100% |

The mixture was dissolved in water to form a 1% solution using a CFS Scanbrine mixer with paddle agitation. The solution was left to stand for a period of 1 hour to 24 hours to form a fully hydrated gel or viscous solution.

The following ingredient was added to the solution:
iron phosphate 3%

A pump is necessary to run the machine but after a short while bubbles may form in the gel solution in the applicator. To prevent this problem food grade anti foaming agents can be used. Polydimethylsiloxane is preferred but calcium alginate, methyl ethyl cellulose, methylphenylpolysiloxane or polyethylene glycol can be used.
(b) The solution of Example 4(a) may be used directly. Alternatively, ingredients were combined as follows:

| Ingredient | % |
|---|---|
| Mixture of Example 4(a) | 0.9% |
| Vegetable oil | 5% |
| Iron phosphate | 3% |
| water | 91.1% |
| | 100% |

### Example 5 Secondary Aqueous Coating Liquid

(a) A secondary coating composition was prepared by mixing the following ingredients:

| Ingredient | % |
|---|---|
| modified starch (Thermflo) | 35% |
| thickener (Methocel A4M) | 25% |
| xanthan gum | 25% |
| egg albumen | 15% |
| | 100% |

The mixture was dissolved in water to form a solution containing 1% of the listed dry ingredients.
(b) A secondary coating liquid was prepared by mixing the following ingredients:-

| Ingredient | % |
|---|---|
| composition of Example 5(a) | 1% |
| vegetable oil | 5% |
| water | 94% |
| | 100% |

### Example 6 - Preparation of Crumb

A hydrocolloid containing crumb was produced by extrusion of a farinaceous dough mixture as disclosed in WO2010/001101.

A flour composition was prepared as follows:

| Ingredient | % |
|---|---|
| flour mixture | 96.4% |
| sodium bicarbonate (Bex baking powder) | 2.0% |
| glyceryl monostearate | 0.6% |
| salt | 1.0% |
| | 100.0% |

The gelling agent was as follows:

| Ingredient | % |
|---|---|
| guar gum | 67% |
| sodium metabisulphite | 33% |
| | 100% |

The gelling agent was hydrated at 3% in 97% water. This was done using a high shear mixer. The hydrated mix was left to stand for at least 12 hours after mixing.

### Example 7 - Production of Microwaveable Frozen Chicken Nuggets

Stabilised substrates prepared in accordance with Example 3 were coated with a primary aqueous coating liquid as described in Example 4. A fine crumb coating as described in Example 6 was applied followed by a secondary aqueous coating liquid as described in Example 5.

Next, a coating of the coarse crumb of Example 5 (particle size 3-4mm or the configuration of Example 7) is applied using a CrumbMaster applicator manufactured by CFS, Bakel, Netherlands..

Following application of the first and second crumb layers the coated substrates enter a fryer.

Heated oil contained in an elongate reservoir is heated to a constant temperature of 180 to 188°C. Pure rapeseed oil is employed.

Parallel upper and lower conveyors were used to prevent the substrate pieces from floating during passage through the fryer. A frying time of 2 minutes 30 seconds may be used although this may be varied dependent on the weight and size of the particles. After frying the core temperature of the particles was in the range 74-85°C. A small loss of weight was observed due to loss of water from the substrate but this is mostly compensated for by an uptake of oil.

Following frying the fried products are transferred directly and without delay to a freezing station.

The fried products when removed from the heated oil had an external temperature of about 180°C and a core temperature of about 90°C. The products were transferred by the conveyor into a cryogenic freezer during a period of not less than 2 minutes. During this time the temperature of the outer crumb was reduced due to contact with the atmosphere but the temperature of the core may for a brief period due to transfer of heat from the outer crumb layer to the core. On entry into the freezer the core temperature may be between 70°C and 100°C, generally about 75°C.

The fried product was immediately transferred to a cryogenic freezer which reduced the core temperature to a maximum of -25°C, preferably -30°C. The time from the removal from the fryer to entry into the freezer was less than 2 minutes.

The transfer from the fryer to the freezer is arranged so that the core temperature of the product was reduced from 75°C to -30°C during a period not longer than 15 minutes

### Example 8 - Control Battered Product

(a) A control product was produced using a commercial batter mix and a double pass application process. The following steps were employed:
   1. Mix the batter in the ratio of 100 g of batter to 165 g of water
   2. Mix with a paddle mixer
   3. Allow to stand for 15 minutes
   4. Predust the substrate with wheat flour - check weigh
   5. Apply batter - check weigh
   6. Apply microwavable crumb dust - check weigh
   7. Apply batter - check weigh
   8. Apply heavier grist crumb - check weigh
   9. Fry in vegetable oil at 170°C for 150 seconds for full cook.
   10. Check weigh final product
   11. Freeze
   12. Pack

The mixture was formed into 12 g nuggets (average) in a die. The nuggets were then frozen to -25°C.

The substrate comprised:

| | |
|---|---|
| Chicken breast mince | 80% |
| Stabiliser composition (Example 1) | 5% |
| Pinhead rusk | 2% |
| Salt | 1% |
| Water | 12% |
| | 100% |

The crumb and crumb dust were made in accordance with the disclosure of WO2010/001101.

The results were as follows:
Viscosity of batter: 580 cPs at 6.8°C
Core material: chicken nuggets
Temp oil: 185°C
Temp of the core products before coating and frying: -3°C

Weight recorded in grams

| 5 pcs | Core | +flour predust | +batter | +dust | +batter | +crumb | Finished cooked weight (Total) | Finish temp |
|---|---|---|---|---|---|---|---|---|
| | 10.8 | 11.1 | 13.1 | 14.0 | 17.8 | 19.1 | | |
| | 11.7 | 12.1 | 15.4 | 15.7 | 19.5 | 20.4 | | |
| | 13.7 | 14.1 | 18.1 | 18.6 | 22.4 | 24.0 | | |
| | 13.6 | 14.0 | 17.8 | 18.0 | 21.9 | 22.9 | | |
| | 13.1 | 13.5 | 16.4 | 16.5 | 20.4 | 21.6 | 106 | 80°C+ |
| | | | | | | | | |
| | 10.9 | 11.2 | 13.2 | 13.6 | 16.8 | 18.7 | | |
| | 11.1 | 11.3 | 13.5 | 14.2 | 17.9 | 19.5 | | |
| | 12.3 | 12.7 | 13.8 | 14.2 | 18.0 | 19.3 | | |
| | 13.4 | 13.8 | 17.8 | 18.3 | 21.8 | 22.9 | | |
| | 12.9 | 13.3 | 17.2 | 17.5 | 18.9 | 20.2 | 97 | 80°C |

The appearance of the chicken nuggets was that they were light golden in colour and had a good coating integrity. Adhesion before microwaving was good and after microwaving was very good with no ballooning observed. The thickness of the coating was 2mm. The product had a flavour of cooked wheat and very good crispness. The coating was dry with no oiliness or excess oil and no oil was left on the taster's fingers.
(b) Example 8(a) was repeated with the first batter layer of step (a) replaced by a 1% solution of:

| | |
|---|---|
| Modified starch (Thermflo) | 35% |
| Methyl cellulose (Methocel A4M Premium) | 25% |
| Xanthan gum | 25% |
| Egg albumen | 15% |
| | 100% |

The results were similar to Example 8(a). The pick-up was 1.4%.

### Example 9

A first gel coating was made by mixing the following ingredients (1g) in water (99g) using a high shear mixer to give a 1% ^{w}/_{w} solution.

| | |
|---|---|
| Modified starch (Thermflo) | 35% |
| Methyl cellulose (Methocel A4M Premium) | 25% |
| Xanthan gum | 25% |
| Egg albumen | 15% |
| | 100% |

The gel was applied to the substrates followed by the crumb dust of Example 8.

A second gel coating was made by mixing the following ingredients (1g) in water (99g) using a high shear mixer to give a 1% ^{w}/_{w} solution. The second gel was applied to the product and the product was completed using the following steps:

| | |
|---|---|
| Modified starch (Thermflo) | 35% |
| Methyl cellulose (Methocel A4M Premium) | 25% |
| Xanthan gum | 25% |
| Egg albumen | 15% |
| | 100% |

The results were as follows:

| | |
|---|---|
| Viscosity of gel: | 420 cPs at 4.8°C |
| Core material: | chicken nuggets |
| Temp oil: | 185°C |
| Temp core products before coating and frying: | -3°C |
| Fry time: | 2 mins 30 secs |

Weight recorded in grams

| 5 pcs | Core | +gel | +dust | +gel | +crumb | Finished cooked weight (Total) | Finish temp |
|---|---|---|---|---|---|---|---|
| | 11.0 | 12.8 | 14.6 | 17.0 | 18.4 | | |
| | 11.4 | 13.1 | 14.6 | 17.7 | 19.3 | | |
| | 10.8 | 12.5 | 13.7 | 16.3 | 18.2 | | |
| | 13.9 | 15.7 | 17.5 | 20.1 | 21.5 | | |
| | 11.8 | 13.9 | 15.3 | 19.0 | 21.6 | 93 | 80°C |
| | | | | | | | |
| | 10.1 | 11.2 | 12.5 | 14.5 | 16.4 | | |
| | 10.2 | 11.2 | 12.0 | 14.1 | 15.1 | | |
| | 10.8 | 12.1 | 13.2 | 15.2 | 16.3 | | |
| | 10.7 | 12.2 | 13.5 | 16.1 | 17.0 | | |
| | 12.1 | 14.1 | 15.3 | 18.1 | 20.1 | 77 | 80°C |

The appearance of the chicken nuggets was that they were light golden. The coating integrity was judged to be poor with the crumb coming loose during handling and packaging. The coating also became loose when frozen. Adhesion was poor with bald spots being caused during frying. Pre-microwave adhesion was poor and post-microwave adhesion was fair but crumbs fell off onto the plate. Slight ballooning was observed and poor surface adhesion was apparent. The thickness of the coating was 2mm and the coating had a flavour of cooked wheat with good crispness. The coating was observed to be irregular with uneven appearance and brown spots.

The average pick up of the outer crumb as percentage of core weight was 13wt%.

### Example 10

The procedure of Example 9 was followed using first and second coatings containing the coating mixture (2g) in water (98g) to give a 2% ^{w}/_{w} solution.

The results were as follows:
Viscosity of gel: 1370 cPs at 6.1°C
Core material: chicken nuggets
Temp oil: 185°C
Temp of the core products before coating and frying: -3°C
Fry time: 2 mins 30 secs

Weight recorded in grams

| 5 pcs | Core | +gel | +dust | +gel | +crumb | Finished cooked weight | Finish temp |
|---|---|---|---|---|---|---|---|
| | 8.9 | 11.2 | 12.1 | 14.8 | 16.8 | | |
| | 13.0 | 15.4 | 16.5 | 19.5 | 22.4 | | |
| | 9.7 | 12.2 | 12.5 | 15.4 | 17.8 | | |
| | 11.4 | 13.3 | 14.6 | 17.7 | 20.1 | | |
| | 12.2 | 15.3 | 16.2 | 18.7 | 21.8 | 92 | 80°C+ |
| | | | | | | | |
| | 10.3 | 12.9 | 14.0 | 17.8 | 20.7 | | |
| | 12.1 | 14.3 | 15.2 | 18.7 | 21.6 | | |
| | 12.8 | 14.8 | 16..1 | 20.5 | 23.9 | | |
| | 11.9 | 14.7 | 15.3 | 17.2 | 20.4 | | |
| | 12.0 | 14.2 | 14.8 | 19.1 | 22.2 | 101 | 80°C+ |

The colour of the coating was light golden with good integrity and no bald spots. Pre-microwave and post-microwave adhesion was judged to be acceptable. The thickness of the coating was 3mm and the flavour of the coating was cooked wheat. The crispness was good.

The average pick up of the outer crumb as percentage of core weight was 14wt%.

### Example 11

Example 9 was repeated using the following formulation:

| | |
|---|---|
| Modified starch (Thermflo) | 35% |
| Methyl cellulose (Methocel A4M Premium) | 25% |
| Xanthan gum | 15% |
| Egg albumen | 25% |
| | 100% |

The results were as follows:
Viscosity of gel: 220 cPs at 3.3°C
Core material: chicken nuggets
Temp oil: 185°C
Temp of the core products before coating and frying; -3°C
Fry time: 2 mins 30 secs

Weight recorded in grams

| 5 pcs | Core | +gel | +dust | +gel | +crumb | Finished cooked weight (Total) | Finish weight |
|---|---|---|---|---|---|---|---|
| | 13.7 | 15.3 | 16.8 | 19.4 | 21.1 | | |
| | 10.3 | 11.7 | 12.0 | 14.9 | 16.6 | | |
| | 10.5 | 11.1 | 13.1 | 15.7 | 16.2 | | |
| | 11.0 | 12.7 | 14.8 | 16.7 | 17.9 | | |
| | 11.9 | 12.5 | 15.0 | 17.1 | 18.2 | 85 | 80°C+ |
| | | | | | | | |
| | 10.2 | 12.1 | 13.0 | 15.1 | 17.3 | | |
| | 12.3 | 13.6 | 14.1 | 16.7 | 18.2 | | |
| | 9.8 | 11.7 | 12.2 | 14.6 | 16.9 | | |
| | 11.2 | 12.3 | 13.5 | 16.3 | 18.0 | | |
| | 11.6 | 13.1 | 14.1 | 16.7 | 18.5 | 80 | 80°C+ |

The appearance of the chicken nuggets was that they were light golden with good coating integrity and no bald spots. The coating was judged to be superior to Example 9 with good pre-microwave and good post-microwave adhesion. No ballooning was observed and the thickness of the coating was 2mm. The flavour of the coating was cooked wheat with good crispness. The coating was judged to have good appearance and good crumb integrity with no brown spots.

The average pick up of the outer crumb as percentage of core weight was 14wt%.

### Example 12

Example 10 was repeated using the formulation of Example 11.

The results were as follows:
- Viscosity of gel:: 780 cPs at 6.1°C
- Core material:: chicken nuggets
- Temp oil:: 185°C
- Temp core products before coating and frying;: -3°C
- Fry time:: 2 mins 30 secs

Weight recorded in grams

| 5 pcs | Core | +gel | +dust | +gel | +crumb | Finished cooked weight | Finish temp |
|---|---|---|---|---|---|---|---|
| | 11.3 | 13.7 | 14.3 | 17.6 | 20.7 | | |
| | 12.2 | 14.5 | 16.0 | 18.9 | 21.9 | | |
| | 12.6 | 15.4 | 16.4 | 19.4 | 23.3 | | |
| | 12.1 | 14.3 | 15.5 | 18.8 | 21.8 | | |
| | 12.5 | 15.1 | 16.5 | 19.7 | 23.4 | 101 | 80°C+ |
| | | | | | | | |
| | 13.2 | 16.4 | 17.3 | 20.7 | 23.6 | | |
| | 14.4 | 16.9 | 18.5 | 22.2 | 25.4 | | |
| | 13.7 | 16.4 | 17.7 | 21.1 | 24.4 | | |
| | 11.1 | 13.0 | 15.0 | 18.8 | 22.6 | | |
| | 13.1 | 15.1 | 16.7 | 19.8 | 22.6 | 112 | 80°C+ |

The appearance of the chicken nuggets was that they were light golden in colour with good coating integrity and no bald spots. The colour was even with good pre-microwave adhesion and good post-microwave adhesion. No ballooning was observed and the thickness of the coating was 3 mm. The flavour of the coating was cooked wheat with good crispness.

The average pick up of the outer crumb as percentage of core weight was 26wt%.

### Example 13

The procedure of Example 9 was repeated using a first gel coating comprising the following ingredients:

| | |
|---|---|
| Modified starch (Thermflo) | 20% |
| Modified starch (Hylon VII) | 15% |
| Methyl cellulose (Methocel A4M Premium) | 20% |
| Gellan gum | 25% |
| Egg albumen | 20% |
| | 100% |

A second gel coating comprised the following ingredients:

| | |
|---|---|
| Modified starch (Thermflo) | 20% |
| Modified starch (Hylon VII) | 15% |
| Methyl cellulose (Methocel A4M Premium) | 20% |
| Gellan gum | 25% |
| Egg albumen | 20% |
| | 100% |

The results were as follows:
- Viscosity of gel:: 250 cPs at 1.6°C
- Core material:: chicken nuggets
- Temp oil:: 185°C
- Temp core products before coating and frying;: -3°C
- Fry time:: 2 mins 30 secs

Weight recorded in grams

| 5 pcs | Core | +gel | +dust | +gel | +crumb | Finished cooked weight | Finish temp |
|---|---|---|---|---|---|---|---|
| | 10.6 | 11.8 | 12.4 | 14.8 | 16.6 | | |
| | 10.5 | 11.9 | 13.0 | 15.5 | 17.2 | | |
| | 12.3 | 13.8 | 15.2 | 18.0 | 19.7 | | |
| | 13.6 | 15.3 | 16.5 | 19.2 | 20.8 | | |
| | 11.9 | 13.7 | 14.2 | 16.5 | 18.7 | 82 | 80°C+ |
| | | | | | | | |
| | 11.9 | 12.9 | 14.0 | 16.2 | 17.7 | | |
| | 11.8 | 13.1 | 14.0 | 15.9 | 17.8 | | |
| | 10.1 | 11.5 | 12.3 | 14.8 | 15.7 | | |
| | 12.6 | 14.4 | 15.6 | 18.4 | 19.7 | | |
| | 13.3 | 14.9 | 15.3 | 17.6 | 19.2 | 80 | 80°C+ |

The appearance of the chicken nuggets was that they were light golden but the coating integrity was poor with bald spots and browning. Adhesion was considered to be acceptable to good in quality with good pre-microwave and good post-microwave adhesion. No ballooning was observed and the coating thickness was 2 mm. The flavour of the coating was cooked wheat with good crispness.

The average pick up of the outer crumb as percentage of core weight was 14wt%.

### Example 14

Example 13 was repeated using a 2% ^{w}/_{w} mixture for the first and second gel coatings. The results were as follows:
- Viscosity of gel:: 1250 cPs at 3.2°C
- Core material:: chicken nuggets
- Temp oil:: 185°C
- Temp core products before coating and frying;: -3°C
- Fry time:: 2 mins 30 secs

Weight recorded in grams

| 5 pcs | Core | +gel | +dust | +gel | +crumb | Finished cooked weight | Finish temp |
|---|---|---|---|---|---|---|---|
| | 11.3 | 14.2 | 15.3 | 19.4 | 23.1 | | |
| | 12.0 | 15.2 | 15.7 | 19.9 | 23.1 | | |
| | 11.4 | 13.4 | 14.0 | 18.5 | 21.7 | | |
| | 10.1 | 13.4 | 14.5 | 18.7 | 21.2 | | |
| | 11.6 | 14.7 | 15.3 | 19.0 | 22.5 | 100 | 80°C+ |
| | | | | | | | |
| | 12.2 | 14.9 | 16.4 | 19.3 | 21.6 | | |
| | 12.0 | 13.2 | 14.6 | 18.4 | 21.1 | | |
| | 11.3 | 14.2 | 15.4 | 19.6 | 21.8 | | |
| | 11.6 | 14.6 | 15.7 | 20.5 | 23.3 | | |
| | 14.0 | 16.5 | 17.3 | 21.2 | 24.8 | 101 | 80°C+ |

The appearance of the chicken nuggets was that they were light golden with good coating integrity. Adhesion was good with good pre-microwave and good post-microwave adhesion. No ballooning was observed and the thickness of the coating was 3 mm. The flavour of the coating was cooked wheat with good crispness.

The average pick up of the outer crumb as percentage of core weight was 25wt%.

### Example 15

The procedure of Example 9 was repeated using the following first and second coatings both at concentrations of 1wt%:
First Coating -

| | |
|---|---|
| Methyl cellulose (A4M Premium) | 25% |
| Modified starch (Thermflo) | 30% |
| Egg albumen | 25% |
| Polydextrose | 5% |
| Oat starch | 15% |
| | 100% |

Second Coating -

| | |
|---|---|
| Methyl cellulose (A4M Premium) | 25% |
| Modified starch (Thermflo) | 30% |
| Egg albumen | 25% |
| Polydextrose | 5% |
| Oat starch | 15% |
| | 100% |

The results were as follows:

| | |
|---|---|
| Viscosity of gel: | 20 cPs at 2.8°C |

The viscosity of the coating composition at 1% regarded as too low to use and the products were therefore discarded.

### Example 16

The procedure of Example 15 was repeated using first and second coatings comprising ^{w}/_{w} of the listed ingredients.

The results were as follows:

| | |
|---|---|
| Viscosity of gel: | 60 cPs at 3.0°C |

The viscosity of the coating composition at 2% regarded as too low to use and the products were therefore discarded.

### Example 17

The procedure of Example 9 was repeated using first and second coatings containing the following ingredients at concentrations of 1wt%:-

| | |
|---|---|
| Gellan gum | 25% |
| Modified starch (Thermflo) | 30% |
| Egg albumen | 25% |
| Oat starch | 20% |
| | 100% |

The results were as follows:

| | |
|---|---|
| Viscosity of gel: | 250 cPs at 5.3°C |
| Core material: | chicken nuggets |
| Temp oil: | 185°C |
| Temp of the core products before coating and frying;-3°C | |
| Fry time: | 2 mins 30 secs |

Weight recorded in grams

| 5 pcs | Core | +gel | +dust | +gel | +crumb | Finished cooked weight | Finish temp |
|---|---|---|---|---|---|---|---|
| | 12.7 | 14.9 | 15.8 | 18.6 | 20.7 | | |
| | 12.4 | 14.3 | 15.2 | 17.5 | 20.3 | | |
| | 13.4 | 15.2 | 17.0 | 19.0 | 21.6 | | |
| | 13.0 | 14.7 | 15.6 | 18.4 | 20.4 | | |
| | 11.6 | 13.0 | 14.1 | 16.4 | 18.5 | 90 | 80°C+ |
| | | | | | | | |
| | 11.6 | 13.2 | 13.8 | 15.9 | 17.6 | | |
| | 11.8 | 12.9 | 14.2 | 15.9 | 18.7 | | |
| | 13.7 | 15.6 | 17.2 | 19.8 | 21.9 | | |
| | 11.1 | 12.7 | 13.4 | 15.4 | 18.0 | | |
| | 11.7 | 12.9 | 14.0 | 16.0 | 18.3 | 85 | 80°C+ |

The appearance of the chicken nuggets was that they were light golden with generally good coating integrity but two of the samples had bad adhesion. Adhesion was judged to be acceptable with good pre-microwave and good post-microwave adhesion. No ballooning was observed and the thickness of the coating was 2 mm. The flavour of the coating was cooked wheat with good crispness.

The average pick up of the outer crumb as percentage of core weight was 19wt%.

### Example 18

The procedure of Example 9 was repeated using first and second coatings containing the following ingredients at a concentration of 2wt%:-

| | |
|---|---|
| Gellan gum | 25% |
| Modified starch (Thermflo) | 30% |
| Egg albumen | 25% |
| Oat starch | 20% |
| | 100% |

The results were as follows:
- Viscosity of gel:: 800 cPs at 5.3°C
- Core material:: chicken nuggets made 20.08.16
- Temp oil:: 185°C
- Temp core products before coating and frying;: -3°C
- Fry time:: 2 mins 30 secs

Weight recorded in grams

| 5 pcs | Core | +gel | +dust | +gel | +crumb | Finished cooked weight | Finish temp |
|---|---|---|---|---|---|---|---|
| | 10.9 | 13.0 | 14.3 | 18.3 | 20.8 | 20.8 | |
| | 10.4 | 12.2 | 13.5 | 16.0 | 18.3 | | |
| | 13.1 | 15.2 | 16.7 | 20.2 | 21.9 | | |
| | 11.4 | 12.8 | 13.6 | 16.3 | 19.0 | | |
| | 11.3 | 13.6 | 14.5 | 18.2 | 20.8 | 89 | 80°C+ |
| | | | | | | | |
| | 13.9 | 17.4 | 18.2 | 21.9 | 25.0 | | |
| | 14.0 | 17.2 | 18.4 | 21.9 | 25.4 | | |
| | 13.5 | 15.9 | 17.0 | 22.1 | 25.7 | | |
| | 12.1 | 15.1 | 16.2 | 19.7 | 22.8 | | |
| | 10.4 | 13.5 | 15.3 | 18.1 | 21.2 | 109 | 80°C+ |

The appearance of the chicken nuggets was that they were light golden with the product having good pre-microwave adhesion and good post-microwave adhesion. No ballooning was observed but the coating was too thick on some samples. The thickness of the coating was 3 mm with a flavour of cooked wheat. The crispness was good but the gel coating was evident but could be improved by machine application.

The coatings of Examples 9 to 18 exhibited good pick up of crumb than when using a conventional, commercial batter. This allowed formation of a crisper coating with a lower dry solids content and absence of a flour-like flavour and texture.

The average pick up of the outer crumb as percentage of core weight was 23wt%.

## Claims

1. A method of producing a frozen, microwaveable, coated food product comprising the successive steps of:
providing a portion of a solid or solidified substrate;
coating the portion with a primary aqueous coating liquid to form a primary coated portion;
applying a coating of bonding crumb to the primary coated portion to form a bonding crumb coated portion;
applying a secondary aqueous coating liquid to the bonding crumb coated portion to form a secondary coated portion;
applying a coating of coating crumb to the secondary coated portion to form a breaded portion;
frying the breaded portion by contacting the breaded portion for at least 100 seconds with hot oil having a temperature of at least 150°C; and
freezing the fried coated portion;
wherein the primary coating liquid and the secondary coating liquid contain less than 10wt%, preferably less than 5wt% flour.

2. A method according to claim 1, wherein the secondary aqueous coating liquid contains at least 0.05wt%, preferably 0.1-1wt% cellulose ether.

3. A method according to claim 1 or 2, wherein the secondary aqueous coating liquid contains at least 0.03wt%, preferably 0.05-1wt% egg protein.

4. A method according to any of claims 1 to 3, wherein the secondary aqueous coating liquid contains at least 0.05wt%, preferably 0.01-1wt% of a gum selected from xanthan gum, gellan gum and combinations thereof.

5. A method according to any preceding claim, wherein the secondary aqueous coating liquid contains starch selected from: oat starch, rice starch and mixtures thereof.

6. A method according to claim 5, wherein the amount of starch by dry weight is 5wt% to 30wt%, preferably 10wt% to 25wt%, more preferably about 25wt%.

7. A method according to any preceding claim, wherein the substrate is stabilised with a composition comprising:
| | |
|---|---|
| cellulose gum | 15wt% |
| modified starch | 24wt% |
| polydextrose | 40wt% |
| xanthan gum | 6wt% |
| egg albumen | 15wt% |
| | 100% |

8. A method according to any preceding claim, wherein the amount of dry solids in the secondary aqueous coating liquid may be from 0.5wt% to 3wt%, particularly 1wt% to 2.5wt%, even more preferably 1wt% to 2wt%.

9. A method according to any preceding claim, wherein the secondary aqueous coating contains by dry weight:
| | |
|---|---|
| cellulose gum | 15-35wt% |
| modified starch | 15-35wt% |
| hydrocolloid | 15-30wt% |
| protein component | 10-20wt% |
| | 100% |

10. A method according to any one of claims 1 to 8, wherein the secondary aqueous coating contains by dry weight:
| | |
|---|---|
| cellulose gum | 20-30wt% |
| modified starch | 20-40wt% |
| hydrocolloid | 15-40wt% |
| egg albumen | 10-30wt% |
| | 100% |

11. A method according to any preceding claim, wherein the secondary aqueous coating contains by dry weight:
| | |
|---|---|
| cellulose gum | 25wt% |
| modified starch | 35wt% |
| xanthan gum | 25wt% |
| egg albumen | 15wt% |
| | 100% |

12. A method according to any preceding claim, wherein the secondary aqueous coating contains by dry weight:
| | |
|---|---|
| cellulose gum | 25wt% |
| modified starch | 35wt% |
| xanthan gum | 15wt% |
| egg albumen | 25wt% |
| | 100% |

13. A method according to any of claims 1 to 8, wherein the secondary aqueous coating liquid contains at least 0.1 wt%, preferably 0.15-2wt% of modified starch.

14. A frozen, microwaveable, coated food product comprising:
a core of cooked edible material having a weight equal to 15-95wt% of the food product,
a fried coating that envelops the core of edible material and having weight equal to 5-85wt% of the food product, the coating being formed from at least four coating layers, including successively: a primary aqueous coating, a bonding crumb layer, a secondary aqueous coating and a coating crumb layer;;
wherein the primary aqueous coating and the secondary aqueous coating contain less than 10wt% flour, preferably 5wt% flour, by weight of dry matter and at least 10% cellulose ether by weight of dry matter.

15. A frozen, microwaveable, coated food product according to claim 14, wherein the food product is obtainable by a method according to any of claims 1-13.
